# EUROPEAN PATENT SPECIFICATION

(11) **EP 2 691 814 B1**
(45) Date of publication and mention of the grant of the patent: **08.02.2017**
(21) Application number: 11861981.6
(22) Date of filing: 30.03.2011
(51) Int. Cl.: G03G 9/09, C09D 11/00, B41J 2/01, G03G 9/12, G03G 9/13, G03G 9/135, C09D 11/02, G03G 9/08, G03G 5/00

(54) **ELECTROSTATIC INK COMPOSITION**
ELEKTROSTATISCHE TINTENZUSAMMENSETZUNG
COMPOSITION D'ENCRE ÉLECTROSTATIQUE

(43) Date of publication of application: 05.02.2014
(73) Proprietor: Hewlett-Packard Indigo B.V., 6221 SH Maastricht (NL)
(72) Inventor: BAR-HAIM, Gil, 76101 Nes Ziona (IL); BODINGER, Eyal, 76101 Nes Ziona (IL); TEISHEV, Albert, 76101 Nes Ziona (IL); KLEIN, Marc, 76101 Nes Ziona (IL); KABALNOV, Alexey S., San Diego, California 92127-1899 (US); GUANG, Jin Li, San Diego, California 92127-1899 (US)
(74) Representative: HGF Limited
(86) International application number: PCT/US2011/030434
(87) International publication number: WO 2012/134457

(56) References cited:
- EP-A2- 0 424 093
- WO-A1-96/01442
- US-A- 4 780 389
- US-A- 5 484 679
- US-A- 5 622 804
- US-A- 5 672 457
- US-A1- 2005 181 835
- US-A1- 2008 163 788
- US-A1- 2008 163 789
- US-B1- 6 245 139

## Description

### Background

In electrostatic printing systems, it is common practice to develop a hardcopy of an image by using a photoconductive surface. The photoconductive surface is typically on a cylinder and is often termed a photo imaging plate (PIP). The photoconductive surface is selectively charged with a latent electrostatic image having image and background areas with different potentials. For example, an electrostatic ink composition comprising charged toner particles in a carrier liquid can be brought into contact with the selectively charged photoconductive surface. The charged toner particles adhere to the image areas of the latent image while the background areas remain clean. The image is then transferred to a print substrate (e.g. paper) directly or, more commonly, by being first transferred to an intermediate transfer member, which can be a soft swelling blanket, and then to the print substrate. Variations of this method utilize different ways for forming the electrostatic latent image on a photoreceptor or on a dielectric material.

Typically, an electrostatic ink composition comprises a thermoplastic resin as the basis for the toner particles, and a non-polar liquid as a carrier liquid in which the toner particles are dispersed. Generally, the toner particles contain a colorant such as a pigment. A charge director, also called charge control agent or imaging agent, is also added to the dispersion to induce charge on the particles.

In some systems, the electrostatic ink composition is applied to the PIP by pumping the ink between a stationary electrode and the PIP. Such a system is illustrated in WO 2005/05459, which is incorporated herein by reference in its entirety. Other electrostatic printing systems include a binary ink development (BID) unit. In such a system, the ink is applied to the photoconductive surface by a developer roller. Often, a different developer roller is used for each different color ink (e.g. cyan, magenta, yellow and black). Ink is applied to the developer roller by passing an electrostatic ink composition between a stationary charged electrode and the developer roller. Ideally, the charged toner particles should form a uniform layer on the development roller. The developer roller rotates, such that the charged particles contact the PIP electrically. Such a system is illustrated in US 5,436,706, US 5,610,694 and US 5,737,666, all of which are incorporated herein by reference in their entirety.

The present inventors identified that some of electrostatic ink compositions they were developing resulted in an unwanted ink build-up on the charged stationary electrode in a BID system. The problem was found to be particularly acute with certain black inks, particularly when used with toner particles that contain relatively 'hard' resins, i.e. typically resins having a relatively high melt viscosity and/or a relatively high acidity, and resins that had a low lecithin content and/or contained certain synthetic charge directors, for example, barium bis sulfosuccinate salt. They found that once the build-up of ink becomes sufficiently thick, this adversely affects the uniformity of the distribution of the toner particles on the developer roller. A non-uniform distribution of ink on the developer roller ultimately results in adverse printing patterns on the print substrate, for example in the form of streaks.

It would be desirable to develop ink compositions that avoid or at least mitigate the problem of ink build-up on electrodes in an electrostatic printing process.

### Brief Description of the Figures

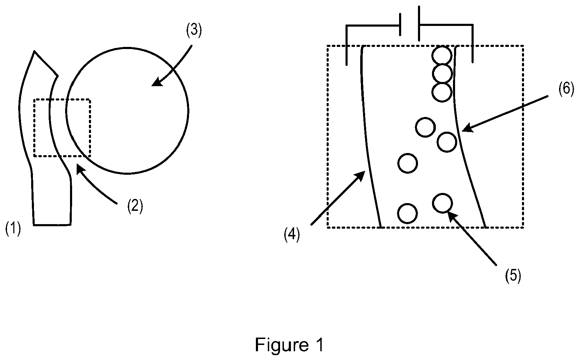

Figure 1 shows, on the left hand side, a schematic illustration of a stationary electrode (1) and a developer roller (3), for use in a BID system in an liquid electrostatic printer. The gap between the electrode (1) and the developer (3) is shown in the enlarged schematic figure on the right hand side of Figure 1. Here is shown a surface (4) of the stationary electrode (1) and an opposing surface (6) of the developer roller (3). Negatively charged toner particles (5) are disposed in a carrier liquid between he surfaces (4) and (6). A voltage is applied across the stationary electrode and the developer roller such that the negatively charged toner particles are drawn to the surface (6) of the developer roller.

### Detailed Description

Before the present invention is disclosed and described, it is to be understood that this invention is not limited to the particular process steps and materials disclosed herein because such process steps and materials may vary somewhat. It is also to be understood that the terminology used herein is used for the purpose of describing particular embodiments only. The terms are not intended to be limiting because the scope of the present invention is intended to be limited only by the appended claims and equivalents thereof.

It is noted that, as used in this specification and the appended claims, the singular forms "a," "an," and "the" include plural referents unless the context clearly dictates otherwise.

As used herein, "carrier liquid," "carrier," or "carrier vehicle" refers to the fluid in which the polymers, particles, colorant, charge directors and other additives can be dispersed to form a liquid electrostatic ink or electrophotographic ink. Such carrier liquids and vehicle components are known in the art. Typical carrier liquids can include a mixture of a variety of different agents, such as surfactants, co-solvents, viscosity modifiers, and/or other possible ingredients.

As used herein, "electrostatic ink composition" generally refers to a ink composition in liquid form that is typically suitable for use in an electrostatic printing process, sometimes termed an electrophotographic printing process.

As used herein, "colorant" includes pigments and dyes.

As used herein, "pigment" generally includes pigment colorants, magnetic particles, aluminas, silicas, and/or other ceramics or organo-metallics, whether or not such particulates impart color. Thus, though the present description primarily exemplifies the use of pigment colorants, the term "pigment" can be used more generally to describe not only pigment colorants, but other pigments such as organometallics, ferrites, ceramics, etc.

As used herein, "copolymer" refers to a polymer that is polymerized from at least two monomers.

As used herein, "melt flow rate" generally refers to the extrusion rate of a resin through an orifice of defined dimensions at a specified temperature and load, usually reported as temperature/load, e.g. 190°C/2.16 kg. Flow rates can be used to differentiate grades or provide a measure of degradation of a material as a result of molding. In the present disclosure, "melt flow rate" is measured per ASTM D1238-04c Standard Test Method for Melt Flow Rates of Thermoplastics by Extrusion Plastometer, as known in the art. If a melt flow rate of a particular polymer is specified, unless otherwise stated, it is the melt flow rate for that polymer alone, in the absence of any of the other components of the liquid toner composition.

As used herein, "acidity," "acid number," or "acid value" refers to the mass of potassium hydroxide (KOH) in milligrams that is required to neutralize one gram of a substance. The acidity of a polymer can be measured according to standard techniques, for example as described in ASTM D1386. If the acidity of a particular polymer is specified, unless otherwise stated, it is the acidity for that polymer alone, in the absence of any of the other components of the liquid toner composition.

As used herein, "melt viscosity" generally refers to the ratio of shear stress to shear rate at a given shear stress or shear rate. Testing is generally performed using a capillary rheometer. A plastic charge is heated in the rheometer barrel and is forced through a die with a plunger. The plunger is pushed either by a constant force or at constant rate depending on the equipment. Measurements are taken once the system has reached steady-state operation. One method used is measuring Brookfield viscosity @ 140°C, units are mPa-s or cPoise, as known in the art. Alternatively, the melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate. If the melt viscosity of a particular polymer is specified, unless otherwise stated, it is the melt viscosity for that polymer alone, in the absence of any of the other components of the liquid toner composition.

A certain monomer may be described herein as constituting a certain weight percentage of a polymer. This indicates that the repeating units formed from the said monomer in the polymer constitute said weight percentage of the polymer.

As used herein, "incompatible wax" refers to a wax that is incompatible with the polymer blend. Specifically, the wax phase separates from the polymer blend phase upon the cooling of the polymer fused mixture on the substrate during and after the transfer of the ink film from the blanket.

As used herein, "electrostatic printing" or "electrophotographic printing" generally refers to the process that provides an image that is transferred from a photo imaging substrate either directly or indirectly via an intermediate transfer member. As such, the image is not substantially absorbed into the photo imaging substrate on which it is applied. Additionally, "electrophotographic printers" or "electrostatic printers" generally refer to those printers capable of performing electrophotographic printing or electrostatic printing, as described above. "Liquid electrophotographic printing" is a specific type of electrophotographic printing where a liquid ink is employed in the electrophotographic process rather than a powder toner.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and subranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described.

In a first aspect, the present invention provides an electrostatic ink composition comprising:
(a) a carrier liquid;
(b) particles comprising:
   (i) a polymer,
   (ii) a colorant,
(c) a charge director.

In an embodiment, the polymer has a melt flow rate of less than 60 g/10 minutes. In an embodiment, the electrostatic ink excludes a positively charged organic molecule or an organic molecule capable of becoming a positively charged organic molecule, e.g. during an electrostatic printing process, and/or the polymer has a melt flow rate of less than 60 g/10 minutes. In an embodiment, the electrostatic ink composition excludes a species containing a carbocation or capable of forming a carbocation during an electrostatic printing process, and/or the polymer has a melt flow rate of less than 60 g/10 minutes.

In a second aspect, the present invention provides a method of producing a electrostatic ink composition, the method comprising:
combining a carrier liquid, a polymer, and a charge director such that the electrostatic ink composition of the first aspect is formed.

In a third aspect, the present invention provides a method of electrophotographic printing an electrostatic ink composition of the first aspect, the method comprising:
forming a latent electrostatic image on a surface;
contacting the surface with the an electrostatic ink composition of the first aspect, such that at least some of the particles adhere to the surface to form a developed toner image on the surface, and transferring the toner image to a print substrate.

In an embodiment, the electrostatic ink excludes a positively charged organic molecule or an organic molecule capable of becoming a positively charged organic molecule, e.g. during an electrostatic printing process. A positively charged organic molecule includes an organic species bearing a positive charge, excluding any counter-anion(s), for example one or more halide ions, that is or are associated with the organic species when the electrostatic ink composition is not being used in an electrostatic printing process, but which may become dissociated from the organic species in an electrostatic printing process. An electrostatic printing process involves subjected the electrostatic ink composition to an electric field, e.g. an electric field having a field gradient of 1000 V/mm or more, optionally 1500 V/mm or more. In an embodiment, the electrostatic ink composition excludes a species containing a carbocation or capable of forming a carbocation during an electrostatic printing process. In an embodiment, the electrostatic ink excludes a positively charged azine species. In an embodiment, the electrostatic ink excludes a diazonium species. In an embodiment, the electrostatic ink excludes a positively charged amine species, e.g. an amine selected from a quaternary amine, =NH₂⁺ and -NH₃⁺. In an embodiment, the electrostatic ink excludes a positively charged phophine species. The positively charged amine or phosphine species may be formed from the combination of a neutral amine or phosphine species with an acid, e.g. HCl. The electrostatic ink composition may exclude a species having within its structure a carbon atom covalently bonded to three phenyl groups, and optionally and associated with a leaving group. The leaving group may be an anion. The carbon atom may be ionically bonded to the leaving group. The leaving group may be a sulphonic group. Accordingly, the electrostatic ink composition may exclude a species having within its structure a carbon atom covalently bonded to three phenyl groups and associated with a sulphonic acid group. A carbon atom covalently bonded to three phenyl groups is sometimes termed a triphenylmethyl moiety. In an embodiment the electrostatic ink composition excludes a triphenylmethyl species, i.e. a species having a triphenylmethyl moiety within its structure. A number of colorants have such a structure. Accordingly, the electrostatic ink composition may exclude triphenylmethane species, such as triphenylmethane colourants. Triphenylmethyl species, such as triphenylmethane colorants, include, but are not limited to, C.I. Basic Red 9 monohydrochloride, pigment blue 19, pigment blue 61, rosaniline, fuchsine, C.I. Basic Green 4 (malachite green), and crystalline violet, and bromocresol green. Triphenylmethyl colorants are known to the skilled person and described in many textbooks, including, but not limited to, Kent and Riegel's Handbook of Industrial Chemistry and Biotechnology, Volume I, Eleventh edition, section 13.11; Hawley's Condensed Chemical Dictionary, 14th Edition Copyright ©2002 by John Wiley & Sons, Inc., both of which are incorporated herein by reference in their entirety. In an embodiment, the electrostatic ink composition excludes C.I. Basic Red 9 monohydrochloride, pigment blue 19, pigment blue 61, rosaniline, fuchsine, C.I. Basic Green 4 (malachite green), and crystalline violet, bromocresol green, Pigment Red 81, Pigment Red 169, Pigment Red 173, Pigment Violet 1, Pigment Violet 2, Pigment Violet 3, Pigment Violet 39, Pigment Blue 1, Pigment Blue 9, Pigment Blue 14, Pigment Blue 24, Pigment Blue 56, Pigment Blue 78, Pigment Green 1, Pigment Green 2, Pigment Green 4 and Pigment Black 1. Pigment Black 1 has an azine chemistry, 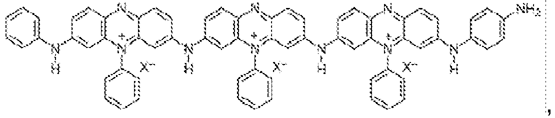 which is similar in principal to that of triphenyl methane and can also cause the same phenomena. If a species is excluded from the electrostatic ink composition, the species is substantially absent or absent from the composition. If a species is substantially absent, the electrostatic ink composition may contain less than 0.001 wt%, optionally less than 0.0001 wt % of the species.

The present inventors found that the exclusion of the species mentioned above from the electrostatic ink composition avoided or significantly reduced ink build-up on an electrode in an electrostatic printing process. Without being bound by theory, this is believed to be because, in an electric field gradient, positively charged organic species migrate toward a negatively charged electrode, thus increasing the ink build-up on this electrode.

The particles of the electrostatic ink composition comprise a colorant. The colorant may be selected from a pigment, dye and a combination thereof. The colorant may be transparent, unicolor or composed of any combination of available colors. The colorant may be selected from a cyan colorant, a yellow colorant, a magenta colorant and a black colorant. In an embodiment, the particles comprise a plurality of colorants. In an embodiment, the particles comprise a first colorant and second colorant, which are different from one another. Further colorants may also be present with the first and second colorants. In an embodiment, first and second colorants are each independently selected from a cyan colorant, a yellow colorant, a magenta colorant and a black colorant. In an embodiment, the first colorant comprises a black colorant, and the second colorant comprises a non-black colorant, for example a colorant selected from a cyan colorant, a yellow colorant and a magenta colorant. The colorant may be selected from a phthalocyanine colorant, an indigold colorant, an indanthrone colorant, a monoazo colorant, a diazo colorant, inorganic salts and complexes, dioxazine colorant, perylene colorant, anthraquinone colorants, and any combination thereof.

The colorant may comprise a yellow colorant. For example, the yellow colorant may be selected from Yellow Pigment 1, Yellow Pigment 3, Yellow Pigment 12, Yellow Pigment 13, 0 Yellow Pigment 14, Yellow Pigment 17, Yellow Pigment 62, Yellow Pigment 65, Yellow Pigment 74, Yellow Pigment 81, Yellow Pigment 83, Yellow Pigment 97, Yellow Pigment 138, Yellow Pigment 139, Yellow Pigment 150, Yellow Pigment 151, Yellow Pigment 154, Yellow Pigment 168, Yellow Pigment 174, Yellow Pigment 176, Yellow Pigment 180, Yellow Pigment 183, Yellow Pigment 188,5 Yellow Pigment 191, and any combination thereof.

The colorant may comprise a magenta colorant. For example, the magenta colorant may be selected from Pigment Red 2, Pigment Red 3, Pigment Red 5, Pigment Red 8, Pigment Red 12, Pigment Red 21, Pigment Red 22, Pigment Red 23, Pigment Red 31, Pigment Red 38, Pigment Red 48:1, Pigment Red 48:2, Pigment Red 48:3, Pigment Red 48:45 Pigment Red 49:1, Pigment Red 49:2, Pigment Red 53:1, Pigment Red 57:1, Pigment Red 81, Pigment Red 112, Pigment Red 122, Pigment Red 123, Pigment Red 144, Pigment Red 146, Pigment Red 149, Pigment Red 170, Pigment Red 175, Pigment Red 176, Pigment Red 177, Pigment Red 179, Pigment Red 185, Pigment Red 190, Pigment Red 202, Pigment Red 208, Pigment Red 224, Pigment Red 254, Pigment Violet 19, Pigment Violet 23, and any combination thereof.

The colorant may comprise a cyan colorant. For example, the cyan colorant may be selected from Pigment Blue 15:0, Pigment Blue 15:1, Pigment Blue 15:2, Pigment Blue 15:3, Pigment Blue 15:4, Pigment Blue 17, Pigment Blue 17:1, Pigment Blue 27, Pigment Blue 60, Pigment Blue 63, Pigment Blue 66 Pigment Blue 73 Pigment Blue 75, Pigment Blue 79 and any combination thereof.

In an embodiment, the colorant may comprise a black colorant, for example a black organic colorant or a black inorganic colorant. For example, the black organic colorant may comprise Pigment Black 7. The black colorant may comprise or be carbon black. Carbon black is known in the art. The black colorant may comprise or be an inorganic material, for example an oxide of a metal. The black colorant may be an oxide of a metal selected from ruthenium, manganese, nickel, chromium, iron, cobalt, copper, and alloys thereof; and mixtures thereof. The black colorant may be selected from Fe₃O₄, RuO₂, Cr₃O₄, Co₂O₃, Ni, Fe-Co chromite, Cr-Fe-Ni spinel, and Cu-chromite. In an embodiment, the particles comprise a first colorant comprising carbon black, and a second colorant comprising a non-black colorant, for example a colorant selected from a cyan colorant, a yellow colorant and a magenta colorant.

In an embodiment, the particles comprise a first colorant comprising a black pigment, and a second colorant comprising a cyan pigment. In an embodiment, the particles comprise a first colorant comprising a black pigment, and a second colorant comprising a cyan pigment and a violet pigment. In an embodiment, the second colorant comprises Pigment Blue 60. In an embodiment, the second colorant comprises Pigment Blue 15:3 and optionally Violet 23. In an embodiment, the Pigment Blue 15:3 and Violet 23 are present in a weight/weight ratio of 5:1 to 1:5, optionally 5:2 to 1:2. This has been found to provide a black colorant that is surprisingly similar in tone to the combination of a black colorant and pigment blue 61 (a triphenylmethyl pigment) but avoids or mitigates ink build-up on an electrode in electrostatic printing.

If the electrostatic ink composition contains first and second colorants, e.g. as described above, the first colorant may present in the electrostatic ink composition in a greater amount than the second colorant. In an embodiment, the first colorant constitutes of from 10 to 20 % by weight, optionally 12 to 18 % by weight, optionally 13 to 16 % by weight, optionally 14 to 15 % by weight, of the solids of the electrostatic ink composition and the second colorant constitutes from 0.5 to 5 % by weight, optionally 1 to 4 % by weight, optionally 2 to 4 % by weight of the solids of the electrostatic ink composition.

Generally, the carrier liquid acts as a dispersing medium for the other components in the liquid electrophotographic ink. For example, the carrier liquid can comprises or be a hydrocarbon, silicone oil, vegetable oil, etc. The carrier liquid can include, but is not limited to, an insulating, non-polar, non-aqueous liquid that is used as the medium for toner particles. The carrier liquid can include compounds that have a resistivity in excess of about 10⁹ ohm-cm. The carrier liquid may have a dielectric constant below about 30, optionally below about 10, optionally below about 5, optionally below about 3. The carrier liquid can include, but is not limited to, hydrocarbons. The hydrocarbon can include, but is not limited to, an aliphatic hydrocarbon, an isomerized aliphatic hydrocarbon, branched chain aliphatic hydrocarbons, aromatic hydrocarbons, and combinations thereof. Embodiments of the carrier liquids include, but are not limited to, aliphatic hydrocarbons, isoparaffinic compounds, paraffinic compounds, dearomatized hydrocarbon compounds, and the like. In particular, the carrier liquids can include, but are not limited to, Isopar-G™, Isopar-H™, Isopar-L™, Isopar-M™, Isopar-K™, Isopar-V™, Norpar 12™, Norpar 13™, Norpar 15™, Exxol D40™, Exxol D80™, Exxol D100™, Exxol D130™, and Exxol D140™ (each sold by EXXON CORPORATION); Teclen N-16™, Teclen N-20™, Teclen N-22™, Nisseki Naphthesol L™, Nisseki Naphthesol M™, Nisseki Naphthesol H™, #0 Solvent L™, #0 Solvent M™, #0 Solvent H™, Nisseki Isosol 300™, Nisseki Isosol 400™, AF-4™, AF-5™, AF-6™ and AF-7™ (each sold by NIPPON OIL CORPORATION); IP Solvent 1620™ and IP Solvent 2028™ (each sold by IDEMITSU PETROCHEMICAL CO., LTD.); Amsco OMS™ and Amsco 460™ (each sold by AMERICAN MINERAL SPIRITS CORP.); and Electron, Positron, New II, Purogen HF (100% synthetic terpenes) (sold by ECOLINK™). The carrier liquids and other components of the present disclosure are described in U.S. Patent 6,337,168, U.S. Patent 6,070,042, and U.S. Patent 5,192,638.

In an embodiment, the carrier liquid constitutes about 20 to 99.5 % by weight of the electrostatic ink composition, optionally 50 to 99.5 % by weight of the electrostatic ink composition. In another embodiment, the carrier liquid may constitute about 40 to 90 % by weight of the electrostatic ink composition. In another embodiment, the carrier liquid may constitute about 60 to 80 % by weight of the electrostatic ink composition. In another embodiment, the carrier liquid may constitute about 90 to 99.5 % of the electrostatic ink composition, optionally 95 to 99 % of the electrostatic ink composition.

The polymer of the particles in the electrostatic ink composition can include, but is not limited to, a thermoplastic polymer. In the art, a thermoplastic polymer is sometimes referred to as a thermoplastic resin. In particular, the polymer may be selected from ethylene acrylic acid copolymers; methacrylic acid copolymers; ethylene vinyl acetate copolymers; copolymers of ethylene (e.g. 80% to 99.9%), and alkyl (e.g. C1 to C5) ester of methacrylic or acrylic acid (e.g. 0.1% to 20%); copolymers of ethylene (e.g. 80% to 99.9%), acrylic or methacrylic acid (e.g. 0.1% to 20.0%) and alkyl (e.g. C1 to C5) ester of methacrylic or acrylic acid (e.g. 0.1% to 20%); polyethylene; polystyrene; isotactic polypropylene (crystalline); ethylene ethyl acrylate; polyesters; polyvinyl toluene; polyamides; styrene/butadiene copolymers; epoxy resins; acrylic resins (e.g. copolymer of acrylic or methacrylic acid and at least one alkyl ester of acrylic or methacrylic acid wherein alkyl is optionally from 1 to about 20 carbon atoms, such as methyl methacrylate (e.g. 50% to 90%)/methacrylic acid (e.g. 0% to 20%)/ethylhexylacrylate (e.g. 10% to 50%)); ethylene-acrylate terpolymers: ethylene-acrylic esters-maleic anhydride (MAH) or glycidyl methacrylate (GMA) terpolymers; ethylene-acrylic acid ionomers and combinations thereof.

The polymer may be a polymer having acidic side groups. The polymer having acidic side groups may have an acidity of 50 mg KOH/g or more, optionally an acidity of 60 mg KOH/g or more, optionally an acidity of 70 mg KOH/g or more, optionally an acidity of 80 mg KOH/g or more, optionally an acidity of 90 mg KOH/g or more, optionally an acidity of 100 mg KOH/g or more, optionally an acidity of 105 mg KOH/g or more, optionally 110 mg KOH/g or more, optionally 115 mg KOH/g or more. The polymer having acidic side groups may have an acidity of 200 mg KOH/g or less, optionally 190 mg or less, optionally 180 mg or less, optionally 130 mg KOH/g or less, optionally 120 mg KOH/g or less. Acidity of a polymer, as measured in mg KOH/g can be measured using standard procedures known in the art, for example using the procedure described in ASTM D1386 or the test method described in the Examples below.

The particles may comprise a polymer, optionally a polymer having acidic side groups, that has a melt flow rate of less than about 60 g/10 minutes, optionally about 50 g/10 minutes or less, optionally about 40 g/10 minutes or less, optionally 30 g/10 minutes or less, optionally 20 g/10 minutes or less, optionally 10 g/10 minutes or less. Optionally, all polymers having acidic side groups and/or ester groups in the particles each individually have a melt flow rate of less than 90 g/10 minutes, 80 g/10 minutes or less, optionally 80 g/10 minutes or less, optionally 70 g/10 minutes or less, optionally 70 g/10 minutes or less, optionally 60 g/10 minutes or less.

The polymer having acidic side groups can have a melt flow rate of about 10 g/10 minutes to about 120 g/10 minutes, optionally about 10 g/10 minutes to about 70 g/10 minutes, optionally about 10 g/10 minutes to 40 g/10 minutes, optionally 20 g/10 minutes to 30 g/10 minutes. The polymer having acidic side groups can have a melt flow rate of optionally about 50 g/10 minutes to about 120 g/10 minutes, optionally 60 g/10 minutes to about 100 g/10 minutes. The melt flow rate can be measured using standard procedures known in the art, for example as described in ASTM D1238.

The acidic side groups may be in free acid form or may be in the form of an anion and associated with one or more counterions, typically metal counterions, e.g. a metal selected from the alkali metals, such as lithium, sodium and potassium, alkali earth metals, such as magnesium or calcium, and transition metals, such as zinc. The polymer having acidic sides groups can be selected from resins such as copolymers of ethylene and an ethylenically unsaturated acid of either acrylic acid or methacrylic acid; and ionomers thereof, such as methacrylic acid and ethylene-acrylic or methacrylic acid copolymers which are at least partially neutralized with metal ions (e.g. Zn, Na, Li) such as SURLYN ® ionomers. The polymer comprising acidic side groups can be a copolymer of ethylene and an ethylenically unsaturated acid of either acrylic or methacrylic acid, where the ethylenically unsaturated acid of either acrylic or methacrylic acid constitute from 5 wt% to about 25 wt% of the copolymer, optionally from 10 wt% to about 20 wt% of the copolymer.

The particles of the electrostatic ink composition may comprise two different polymers having acidic side groups. The two polymers having acidic side groups may have different acidities, which may fall within the ranges mentioned above. The particles may comprise a first polymer having acidic side groups that has an acidity of from 50 mg KOH/g to 110 mg KOH/g and a second polymer having acidic side groups that has an acidity of 110 mg KOH/g to 130 mg KOH/g.

The particles of the electrostatic ink composition may comprise two different polymers having acidic side groups: a first polymer having acidic side groups that has a melt flow rate of about 10 g/10 minutes to about 50 g/10 minutes and an acidity of from 50 mg KOH/g to 110 mg KOH/g, and a second polymer having acidic side groups that has a melt flow rate of about 50 g/10 minutes to about 120 g/10 minutes and an acidity of 110 mg KOH/g to 130 mg KOH/g. The first and second polymers may be absent of ester groups.

In one embodiment, the ratio of the first polymer having acidic side groups to the second polymer having acidic side groups can be from about 10:1 to about 2:1. In another embodiment, the ratio can be from about 6:1 to about 3:1, optionally about 4:1.

The particles may comprise a polymer having a melt viscosity of 15000 poise or less, optionally a melt viscosity of 10000 poise or less, optionally 1000 poise or less, optionally 100 poise or less, optionally 50 poise or less, optionally 10 poise or less; said polymer may be a polymer having acidic side groups as described herein. The particles may comprise a first polymer having a melt viscosity of 15000 poise or more, optionally 20000 poise or more, optionally 50000 poise or more, optionally 70000 poise or more; and optionally, the particles may comprise a second polymer having a melt viscosity less than the first polymer, optionally a melt viscosity of 15000 poise or less, optionally a melt viscosity of 10000 poise or less, optionally 1000 poise or less, optionally 100 poise or less, optionally 50 poise or less, optionally 10 poise or less. The particles may comprise a first polymer having a melt viscosity of more than 60000 poise, optionally from 60000 poise to 100000 poise, optionally from 65000 poise to 85000 poise; a second polymer having a melt viscosity of from 15000 poise to 40000 poise, optionally 20000 poise to 30000 poise, and a third polymer having a melt viscosity of 15000 poise or less, optionally a melt viscosity of 10000 poise or less, optionally 1000 poise or less, optionally 100 poise or less, optionally 50 poise or less, optionally 10 poise or less; an example of the first polymer is Nucrel 960 (from DuPont), and example of the second polymer is Nucrel 699 (from DuPont), and an example of the third polymer is AC-5120 (from Honeywell). The first, second and third polymers may be polymers having acidic side groups as described herein. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate.

If the particles comprise a single type of polymer, the polymer (excluding any other components of the liquid toner composition) may have a melt viscosity of 6000 poise or more, optionally a melt viscosity of 8000 poise or more, optionally a melt viscosity of 10000 poise or more, optionally a melt viscosity of 12000 poise or more. If the particles comprise a plurality of polymers all the polymers of the particles may together form a mixture (excluding any other components of the liquid toner composition) that has a melt viscosity of 6000 poise or more, optionally a melt viscosity of 8000 poise or more, optionally a melt viscosity of 10000 poise or more, optionally a melt viscosity of 12000 poise or more. Melt viscosity can be measured using standard techniques. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate.

The particles of the electrostatic ink composition may comprise two different polymers having acidic side groups that are selected from copolymers of ethylene and an ethylenically unsaturated acid of either acrylic acid; and ionomers thereof, such as methacrylic acid and ethylene-acrylic or methacrylic acid copolymers which are at least partially neutralized with metal ions (e.g. Zn, Na, Li) such as SURLYN ® ionomers. The particles may comprise (i) a first polymer that is a copolymer of ethylene and an ethylenically unsaturated acid of either acrylic acid and methacrylic acid, wherein the ethylenically unsaturated acid of either acrylic or methacrylic acid constitutes from 8 wt% to about 16 wt% of the copolymer, optionally 10 wt% to 16 wt% of the copolymer; and (ii) a second polymer that is a copolymer of ethylene and an ethylenically unsaturated acid of either acrylic acid and methacrylic acid, wherein the ethylenically unsaturated acid of either acrylic or methacrylic acid constitutes from 12 wt% to about 30 wt% of the copolymer, optionally from 14 wt% to about 20 wt% of the copolymer, optionally from 16 wt% to about 20 wt% of the copolymer optionally from 17 wt% to 19 wt% of the copolymer.

In an embodiment, the polymer constitutes about 5 to 90 %, optionally about 5 to 80 %, by weight of the solids of the electrostatic ink composition. In another embodiment, the polymer constitutes about 10 to 60 % by weight of the solids of the electrostatic ink composition. In another embodiment, the polymer constitutes about 15 to 40 % by weight of the solids of the electrostatic ink composition.

The particles may comprise a polymer having acidic side groups, as described above (which is preferably free of ester side groups), and a polymer having ester side groups. The polymer having ester side groups is preferably a thermoplastic polymer. The polymer having ester side groups may further comprise acidic side groups. The polymer having ester side groups may be a co-polymer of a monomer having ester side groups and a monomer having acidic side groups. The polymer may be a co-polymer of a monomer having ester side groups, a monomer having acidic side groups, and a monomer absent of any acidic and ester side groups. The monomer having ester side groups may be a monomer selected from esterified acrylic acid or esterified methacrylic acid. The monomer having acidic side groups may be a monomer selected from acrylic or methacrylic acid. The monomer absent of any acidic and ester side groups may be an alkylene monomer, including, but not limited to, ethylene or propylene. The esterified acrylic acid or esterified methacrylic acid may, respectively, be an alkyl ester of acrylic acid or an alkyl ester of methacrylic acid. The alkyl group in the alkyl ester of acrylic or methacrylic acid may be an alkyl group having 1 to 30 carbons, optionally 1 to 20 carbons, optionally 1 to 10 carbons; optionally selected from methyl, ethyl, iso-propyl, n-propyl, t-butyl, iso-butyl, n-butyl and pentyl.

The polymer having ester side groups may be a co-polymer of a first monomer having ester side groups, a second monomer having acidic side groups and a third monomer which is an alkylene monomer absent of any acidic and ester side groups. The polymer having ester side groups may be a co-polymer of (i) a first monomer having ester side groups selected from esterified acrylic acid or esterified methacrylic acid, optionally an alkyl ester of acrylic or methacrylic acid, (ii) a second monomer having acidic side groups selected from acrylic or methacrylic acid and (iii) a third monomer which is an alkylene monomer selected from ethylene and propylene. The first monomer may constitute 1 to 50 % by weight of the co-polymer, optionally 5 to 40 % by weight, optionally 5 to 20 % by weight of the copolymer, optionally 5 to 15 % by weight of the copolymer. The second monomer may constitute 1 to 50 % by weight of the copolymer, optionally 5 to 40 % by weight of the co-polymer, optionally 5 to 20 % by weight of the co-polymer, optionally 5 to 15 % by weight of the copolymer. In an embodiment, the first monomer constitutes 5 to 40 % by weight of the copolymer, the second monomer constitutes 5 to 40 % by weight of the copolymer, and with the third monomer constituting the remaining weight of the copolymer. In an embodiment, the first monomer constitutes 5 to 15 % by weight of the co-polymer, the second monomer constitutes 5 to 15 % by weight of the co-polymer, with the third monomer constituting the remaining weight of the copolymer. In an embodiment, the first monomer constitutes 8 to 12 % by weight of the co-polymer, the second monomer constitutes 8 to 12 % by weight of the co-polymer, with the third monomer constituting the remaining weight of the copolymer. In an embodiment, the first monomer constitutes about 10 % by weight of the co-polymer, the second monomer constitutes about 10 % by weight of the co-polymer, and with the third monomer constituting the remaining weight of the copolymer. The polymer may be selected from the Bynel ® class of monomer, including Bynel 2022 and Bynel 2002, which are available from DuPont ®.

The polymer having ester side groups may constitute 1% or more by weight of the total amount of the polymers of in the particles, e.g. the total amount of the polymer or polymers having acidic side groups and polymer having ester side groups. The polymer having ester side groups may constitute 5% or more by weight of the total amount of the polymers in the particles, optionally 8% or more by weight of the total amount of the polymers in the particles, optionally 10% or more by weight of the total amount of the polymers in the particles, optionally 15% or more by weight of the total amount of the polymers in the particles, optionally 20% or more by weight of the total amount of the polymers in the particles, optionally 25% or more by weight of the total amount of the polymers in the particles, optionally 30% or more by weight of the total amount of the polymers in the particles, optionally 35% or more by weight of the total amount of the polymers in the particles. The polymer having ester side groups may constitute from 5% to 50% by weight of the total amount of the polymers in the particles, optionally 10% to 40% by weight of the total amount of the polymers in the particles, optionally 15% to 30% by weight of the total amount of the polymers in the particles.

The polymer having ester side groups may have an acidity of 50 mg KOH/g or more, optionally an acidity of 60 mg KOH/g or more, optionally an acidity of 70 mg KOH/g or more, optionally an acidity of 80 mg KOH/g or more. The polymer having ester side groups may have an acidity of 100 mg KOH/g or less, optionally 90 mg KOH/g or less. The polymer having ester side groups may have an acidity of 60 mg KOH/g to 90 mg KOH/g, optionally 70 mg KOH/g to 80 mg KOH/g.

The polymer having ester side groups may have a melt flow rate of about 10 g/10 minutes to about 120 g/10 minutes, optionally about 10 g/10 minutes to about 50 g/10 minutes, optionally about 20 g/10 minutes to about 40 g/10 minutes, optionally about 25 g/10 minutes to about 35 g/10 minutes.

In an embodiment, the polymer or polymers can be selected from the Nucrel family of toners (e.g. Nucrel 403™, Nucrel 407™, Nucrel 609HS™, Nucrel 908HS™, Nucrel 1202HC™, Nucrel 30707™, Nucrel 1214™, Nucrel 903™, Nucrel 3990™, Nucrel 910™, Nucrel 925™, Nucrel 699™, Nucrel 599™, Nucrel 960™, Nucrel RX 76™, Nucrel 2806™, Bynell 2002, Bynell 2014, and Bynell 2020 (sold by E. I. du PONT)), the Aclyn family of toners (e.g. Aaclyn 201 , Aclyn 246, Aclyn 285, and Aclyn 295), and the Lotader family of toners (e.g. Lotader 2210, Lotader, 3430, and Lotader 8200 (sold by Arkema)).

The polymer having ester side groups may constitute 1% or more by weight of the total amount of the polymers in the particles, e.g. the total amount of the polymer or polymers having acidic side groups and polymer having ester side groups. The polymer having ester side groups may constitute 5% or more by weight of the total amount of the polymers in the particles, optionally 8% or more by weight of the total amount of the polymers in the particles, optionally 10% or more by weight of the total amount of the polymers in the particles, optionally 15% or more by weight of the total amount of the polymers in the particles, optionally 20% or more by weight of the total amount of the polymers in the particles, optionally 25% or more by weight of the total amount of the polymers in the particles, optionally 30% or more by weight of the total amount of the polymers in the particles, optionally 35% or more by weight of the total amount of the polymers in the particles. The polymer having ester side groups may constitute from 5% to 50% by weight of the total amount of the polymers in the particles, optionally 10% to 40% by weight of the total amount of the polymers in the particles, optionally 15% to 30% by weight of the total amount of the polymers in the particles.

In an embodiment, the electrostatic ink composition can include a charge adjuvant. The charge adjuvant can include, but is not limited to, barium petronate, calcium petronate, Co salts of naphthenic acid, Ca salts of naphthenic acid, Cu salts of naphthenic acid, Mn salts of naphthenic acid, Ni salts of naphthenic acid, Zn salts of naphthenic acid, Fe salts of naphthenic acid, Ba salts of stearic acid, Co salts of stearic acid, Pb salts of stearic acid, Zn salts of stearic acid, Al salts of stearic acid, Cu salts of stearic acid, Fe salts of stearic acid, metal carboxylates (e.g. Al tristearate, Al octanoate, Li heptanoate, Fe stearate, Fe distearate, Ba stearate, Cr stearate, Mg octanoate, Ca stearate, Fe naphthenate, Zn naphthenate, Mn heptanoate, Zn heptanoate, Ba octanoate, Al octanoate, Co octanoate, Mn octanoate, and Zn octanoate), Co lineolates, Mn lineolates, Pb lineolates, Zn lineolates, Ca oleates, Co oleates, Zn palmirate, Ca resinates, Co resinates, Mn resinates, Pb resinates, Zn resinates, AB diblock copolymers of 2- ethylhexyl methacrylate-co-methacrylic acid calcium, and ammonium salts, copolymers of an alkyl acrylamidoglycolate alkyl ether (e.g. methyl acrylamidoglycolate methyl ether-co-vinyl acetate), and hydroxy bis(3,5-di-tert- butyl salicylic) aluminate monohydrate. In an embodiment, the charge adjuvant is aluminum di and/or tristearate and/or aluminum di and/or tripalmitate.

In an embodiment, the charge adjuvant is about 0.1 to 5 % by weight of the electrostatic ink composition. In another embodiment, the charge adjuvant is about 0.5 to 4 % by weight of the electrostatic ink composition. In another embodiment, the charge adjuvant is about 1 to 3 % by weight of the electrostatic ink composition.

The charge director is added to the carrier liquid in order to maintain sufficient electrostatic charge on the ink particles. In an embodiment, the charge director may comprise ionic compounds, particularly metal salts of fatty acids, metal salts of sulfo-succinates, metal salts of oxyphosphates, metal salts of alkylbenzenesulfonic acid, metal salts of aromatic carboxylic acids or sulfonic acids, as well as zwitterionic and non-ionic compounds, such as polyoxyethylated alkylamines, lecithin, polyvinylpyrrolidone, organic acid esters of polyvalent alcohols, etc. In an embodiment, the charge director is selected from, but is not limited to, oil-soluble petroleum sulfonates (e.g. neutral Calcium Petronate™, neutral Barium Petronate™, and basic Barium Petronate™), polybutylene succinimides (e.g. OLOA™ 1200 and Amoco 575), and glyceride salts (e.g. sodium salts of phosphated mono- and diglycerides with unsaturated and saturated acid substituents), sulfonic acid salts including, but not limited to, barium, sodium, calcium, and aluminum salts of sulfonic acid. The sulfonic acids may include, but are not limited to, alkyl sulfonic acids, aryl sulfonic acids, and sulfonic acids of alkyl succinates (e.g. see WO 2007/130069). In an embodiment, the charge adjuvant imparts a negative charge on the particles.

The charge director used herein can be any as known in the art such as described in U.S. Pat. No. 5,346,796, which is incorporated herein by reference in its entirety.

In an embodiment, the charge director comprises a sulfosuccinate moiety of the general formula [R₁-O-C(O)CH₂CH(SO₃⁻)OC(O)-O-R₂], where each of R₁ and R₂ is an alkyl group. In an embodiment, the charge director comprises nanoparticles of a simple salt and a sulfosuccinate salt of the general formula MAₙ, wherein M is a metal, n is the valence of M, and A is an ion of the general formula [R₁-O-C(O)CH₂CH(SO₃-)OC(O)-O-R₂], where each of R₁ and R₂ is an alkyl group, or other charge directors as found in WO2007130069, which is incorporation herein by reference in its entirety. As described in WO2007130069, the sulfosuccinate salt of the general formula MAₙ is an example of a micelle forming salt. The charge director may be substantially free or free of an acid of the general formula HA, where A is as described above.

The charge director may comprise micelles of said sulfosuccinate salt enclosing at least some of the nanoparticles. The charge director may comprise at least some nanoparticles having a size of 200 nm or less, optionally 2 nm or more. As described in WO2007130069, simple salts are salts that do not form micelles by themselves, although they may form a core for micelles with a micelle forming salt. The ions constructing the simple salts are all hydrophilic. The simple salt may comprise a cation selected from the group consisting of Mg , Ca , Ba , NH₄, tert-butyl ammonium, Li⁺, and Al⁺³, or from any sub-group thereof. The simple salt may comprise an anion selected from the group consisting of SO₄2⁻, PO³⁻, NO₃⁻, HPO₄²⁻, CO₃²⁻, acetate, trifluoroacetate (TFA), Cl⁻, Bf, F⁻, ClO₄⁻, and TiO₃⁴⁻, or from any sub-group thereof. The simple salt may be selected from CaCO₃, Ba₂TiO₃, Al₂(SO₄), A1(NO₃)₃, Ca₃(PO₄)₂, BaSO₄, BaHPO₄, Ba₂(PO₄)₃, CaSO₄, (NH₄)₂CO_{3,} (NH₄)₂SO₄, NH₄OAc, Tert- butyl ammonium bromide, NH₄NO₃, LiTFA, Al₂(SO₄)₃, LiClO₄ and LiBF_{4,} or any sub-group thereof. The charge director may further comprise basic barium petronate (BBP).

In the formula [R₁-O-C(O)CH₂CH(SO₃⁻)OC(O)-O-R₂], optionally each of R₁ and R₂ is an aliphatic alkyl group. Optionally, each of R₁ and R₂ independently is a C₆₋₂₅ alkyl. Optionally, said aliphatic alkyl group is linear. Optionally, said aliphatic alkyl group is branched. Optionally, said aliphatic alkyl group includes a linear chain of more than 6 carbon atoms. Optionally, R₁ and R₂ are the same. Optionally, at least one of R₁ and R₂ is C₁₃H₂₇. Optionally, M is Na, K, Cs, Ca, or Ba. The formula [R₁-O-C(O)CH₂CH(SO₃⁻)OC(O)-O-R₂] and/or the formula MAₙ may be as defined in any part of WO2007130069.

In an embodiment, the charge director constitutes about 0.001% to 20%, optionally 0.01 to 20% by weight, optionally 0.01 to 10% by weight, optionally 0.01 to 1% by weight of the solids of the electrostatic ink composition. In another embodiment, the charge director constitutes about 0.001 to 0.15 % by weight of the solids of the electrostatic ink composition, optionally 0.001 to 0.15 %, optionally 0.001 to 0.02 % by weight of the solids of the electrostatic ink composition. In an embodiment, the charge director imparts a negative charge on the particles. The particle conductivity may range from 50 to 500 pmho/cm, optionally from 200-350 pmho/cm.

In an embodiment, the electrostatic ink composition contains less than 30 mg of lecithin per g of solids of the electrostatic ink composition, optionally 20 mg or less, optionally 10 mg or less, optionally 5 mg or less, optionally 1 mg or less, optionally 0.5 mg or less of lecithin per g of solids of the electrostatic ink composition, optionally 0.5 mg or less of lecithin per g of solids of the electrostatic ink composition. The electrostatic ink composition may comprise no lecithin.

The liquid toner composition may comprise one or more additives, for example an additive selected from a charge adjuvant, a wax, a surfactant, biocides, organic solvents, viscosity modifiers, materials for pH adjustment, sequestering agents, preservatives, compatibility additives, emulsifiers and the like. The wax may be an incompatible wax.

The present invention further provides a method of producing an electrostatic ink composition, the method comprising:
combining a carrier liquid, a polymer, and a charge director such that the electrostatic ink composition of the first aspect is formed. The method can comprise mixing the polymer (or polymers, if more than one polymer is to be present in the particles), and the carrier liquid under appropriate conditions, optionally in the present of the colorant, to form the particles comprising the polymer and the colorant, within the carrier liquid, and mixing the charge director with the carrier liquid. One or more further additives as described herein may be added at any time during the method. The steps described above are not intended to be bound by any particular order. For example, the mixing of the polymer with the carrier liquid may be performed before, after, or concurrently with the step of combining the charge director with the carrier liquid. Additionally, the steps may be combined or performed in a different order as is known in the art. Additionally, the steps may include other necessary processing steps as is known in the art. For example, the step of combining the colorant with the polymer can include grinding the polymer and, optionally, the pigment if present.

The present invention further provices a method of electrophotographic printing an electrostatic ink composition of the first aspect, the method comprising:
forming a latent electrostatic image on a surface;
contacting the surface with the an electrostatic ink composition of the first aspect, such that at least some of the particles adhere to the surface to form a developed toner image on the surface, and transferring the toner image to a print substrate, optionally via an intermediate transfer member.

The surface on which the latent electrostatic image is formed may be on a rotating member, e.g. in the form of a cylinder. The surface on which the latent electrostatic image is formed may form part of a photo imaging plate (PIP). The contacting may involve passing the electrostatic composition of the first aspect between a stationary electrode and a rotating member, which may be a member having the surface having a latent electrostatic image thereon or a member in contact with the surface having a latent electrostatic image thereon. A voltage is applied between the stationary electrode and the rotating member, such that the particles adhere to the surface of the rotating member.

The intermediate transfer member may be a rotating flexible member, which is optionally heated, e.g. to a temperature of from 80 to 160 °C. The print substrate may be any suitable substrate. The substrate may be any suitable substrate capable of having an image printed thereon. The substrate may comprise a material selected from an organic or inorganic material. The material may comprise a natural polymeric material, e.g. cellulose. The material may comprise a synthetic polymeric material, e.g. a polymer formed from alkylene monomers, including, but not limited to, polyethylene and polypropylene, and co-polymers such as styrene-polybutadiene. The material may comprise a metal, which may be in sheet form. The metal may be selected from or made from, for instance, aluminum (Al), silver (Ag), tin (Sn), copper (Cu), mixtures thereof. In an embodiment, the substrate comprises a cellulosic paper. In an embodiment, the cellulosic paper is coated with a polymeric material, e.g. a polymer formed from styrene-butadiene resin. Optionally, the cellulosic paper has an inorganic material bound to its surface (before printing with ink) with a polymeric material, wherein the inorganic material may be selected from, for example, kaolinite or calcium carbonate. The substrate is optionally a cellulosic print substrate such as paper. The cellulosic print substrate is optionally a coated cellulosic print substrate, e.g. having a coating of a polymeric material thereon.

### Examples

The following examples illustrate embodiments of the disclosure that are presently known. Thus, these examples should not be considered as limitations of the present disclosure, but are merely in place to teach how to make compositions of the present disclosure. As such, a representative number of compositions and their method of manufacture are disclosed herein.

### Production of Toner Particles

The general procedure for producing the resin particles for a Toner Composition A is described below.

As a first step, Nucrel 925, Nucrel 2806 and Bynel 2022 resins were mixed in a Ross double planetary mixer with 1500 grams of Isopar L (an iso-parfinic oil manufactured by EXXON) carrier liquid at a speed of 60 rpm and a temperature of 130 °C. for one hour. The total amount of Nucrel 925, Nucrel 2806 and Bynel 2022 resins was 1000 g, and they were present, respectively, in the weight proportions 72:18:10. The temperature is then reduced and mixing is continued until the mixture reaches room temperature. During mixing, the polymer solvates the Isopar and during the cooling granules of polymer (with solvated carrier liquid) in carrier liquid are produced.

As a second step, 1000 grams of the mixture produced in the first step is charged into a Union Process 1 S ball atritor together with 5 grams of aluminum tri-stearate (Riedel de-Haan) as a charge adjuvant and 92 grams of the pigment Monarch 800 (available from CABOT), and Alkali Blue D 6200 from BASF at a ratio of 15 to 3 respectively. The mixture is ground for 2 hours at 55 °C. followed by grinding for 10 hours at 40 °C. until a toner concentrate having toner particles incorporating the adjuvant and pigments is produced.

### Preparation of the Liquid Toner Composition A

The toner concentrate made above is charged utilizing 5 mg/g of charge director and diluted with additional Isopar L to produce a toner having a 2% NVS, with 98% of the toner concentrate being Isopar L. The charge director was a barium bis sulfosuccinate salt, as described in US 2009/0311614, which is incorporated herein by reference in its entirety. Other charge directors as known in the art can also be used. Wax particles suspended in Isopar-L in a weight percentage of 4.5% with respect to the NVS of the toner particles were added. The wax was a polyethylene wax, Acumist B6, available from Honeywell.

In the resultant liquid toner composition A, the percentage of resins is about 80%, the percentage of aluminum tri-stearate is about 1% and the percentage of pigment is about 18%, the percentage of charge director is about 0.5%, and the percentage of polyethylene wax is about 4.5%, all by weight of the NVS in the composition.

### Toner Composition B:

This was the same as toner composition A, but lacking the 2nd Pigment, BASF Alkali Blue D6200 (P.B. 61).

### Toner Composition C:

This was the same as toner composition A, except that the 2^{nd} pigment was replaced with the same amount of Pigment Blue 15:3, which is a Cu(II) phthalocyanine complex. When printed, the ink from this composition had a tone close to that of toner composition A.

### Toner Composition D:

This was the same as toner composition A, except that the 2^{nd} pigment was replaced with Pigment Blue 15:3 and Pigment Violet 23 in a weight ratio of 2.5 to 0.5 (total amount of these pigments being the same as the 2^{nd} pigment in toner composition A). Violet 23 has a dioxazine type chemistry that has an aromatic conjugated rings system, but does not contain any ionic components. When printed, the ink from this composition had a tone very close to that of toner composition A (closer than toner composition C).

### Toner Composition E:

This was the same as toner composition A, except that the 2^{nd} pigment was replaced with the same amount of Pigment Blue 60, which has a core chemistry of dioxazine type. This pigment contains aromatic conjugated rings, but no ionic component. When printed, the ink from this composition had a tone close to that of toner composition A.

### Toner Composition F:

This was the same as toner composition A, except that the 2^{nd} pigment was replaced with the same amount of Pigment Blue 73, which is an inorganic salt (Co₂SiO₄). When printed, the ink from this composition was not as close in tone to that of toner Composition A as toner compositions C to E.

### Test to determine ink cover on an electrode

The Toner compositions A to F were tested for their propensity to produce ink cover on an electrode in an electrostatic printing process. The apparatus used was a model of a typical binary ink development unit, having an electrode and a developer roll. The typical arrangement is shown schematically in Figure 1. Figure 1 shows, on the left hand side, a schematic illustration of a stationary electrode (1) and a developer roller (3), for use in a BID system in an liquid electrostatic printer. The gap between the electrode (1) and the developer (3) is shown in the enlarged schematic figure on the right hand side of Figure 1. Here is shown a surface (4) of the stationary electrode (1) and an opposing surface (6) of the developer roller (3). Negatively charged toner particles (5) are disposed in a carrier liquid between the surfaces (4) and (6). A voltage is applied across the stationary electrode and the developer roller such that the negatively charged toner particles are drawn to the surface (6) of the developer roller.

In a full electrostatic printing apparatus, the device would further comprise components that transfer the ink from the developer roll to a photo imaging plate (PIP) in which the latent image is drawn under electric potential difference, and then on to a further intermediate transfer member (sometimes termed a blanket) before it is transferred to a print substrate, such as paper. However, in the test apparatus used in the present test, the ink on the developer roller is instead returned to the main ink tank, rather than being transferred to a PIP. The test apparatus will be termed a BID robot below. As in a full electrostatic printing apparatus, a voltage is applied between the electrode and the developer roller in the BID robot. The voltages applied were the same as in a standard electrostatic printing apparatus needed to print with the same ink in order to get a proper image Optical Density (OD) on a page. After the BID robot run is finished the BID is autopsied and amount of ink cover is recorded. A typical BID robot run is 150 hours long (approximately 0.5 million impressions equivalent), replacing the Working Dispersion (WD) every 50 hours. In some experiments the present inventors perform a printing check point at the end of the robot run in order to record the effect of the ink cover on the PQ as well.

The present inventors observed that there was significant ink build-up on the electrode in the BID robot for Toner Composition A, but none or very little for Toner Compositions B to F.

In a further experiment, the problematic pigment was treated with NaOH in order to neutralise the carbocation of the PB61 secondary pigment. In a test which ran on the BID robot, simulating a run close to average BID unit life span (0.5M impressions), a medium level ink cover buildup on electrode was observed after 100 hour which is equal to 360kimp. The run was stopped due severe damage to BID developing unit, which the present inventors believe is probably to highly reductive Na ion.

Further tests were carried out on toner compositions similar to toner composition A, but where (i) the resins were replaced with a mixture of resins having a lower melt viscosity (softer resins), namely a mixture of Nucrel 699 and AC-5120 from Honeywell in the weight ratio of 80:20 - this shall be termed Toner Composition G (ii) the charge director (barium bis sulfosuccinate salt) was replaced with a natural charge director containing (a) natural soya lecithin (6.6 wt%), (b) Basic Barium Petronate (Chemtura) (9.8 wt%) and (c) dodecyl benzene sulphonic acid isopropyl amine (Croda) (3.6 wt%) in (d) Isopar 80 wt%) - this shall be termed Toner Composition H, and (iii) the resins were replaced as in Toner Composition G and the charge director (barium bis sulfosuccinate salt) was replaced as in Toner Composition H - this composition shall be termed Toner Composition I.

The present inventors observed charge build-up on the electrode in the BID robot for Toner Compositions G and H, but not for Toner composition I.

While the invention has been described with reference to certain embodiments, those skilled in the art will appreciate that various modifications, changes, omissions, and substitutions can be made without departing from the spirit of the disclosure. It is intended, therefore, that the invention be limited only by the scope of the following claims.

## Claims

1. An electrostatic ink composition comprising:
(a) a carrier liquid;
(b) particles comprising:
(i) a polymer having a melt flow rate of less than 60 g/10 minutes, measured according to ASTM D1238-04c
(ii) a first colorant and a second colorant wherein the first colorant comprises a black colorant and the second colorant comprises a non-black colorant and wherein the second colorant is selected from the group consisting of a phthalocyanine colorant, an indigold colorant, an indanthrone colorant, a monoazo colorant, a diazo colorant, inorganic salts and complexes, dioxazine colorant, perylene colorant, anthraquinone colorants, and any combination thereof,
(c) a charge director,
wherein the electrostatic ink composition excludes a positively charged organic molecule or an organic molecule capable of becoming a positively charged organic molecule during an electrostatic printing process.

2. An electrostatic ink composition according to claim 1, wherein the polymer has a melt flow rate of less than 30 g/10 minutes.

3. An electrostatic ink composition according to claim 1, wherein the charge director is selected from the group consisting of metal salts of fatty acids, metal salts of sulfo-succinates, metal salts of oxyphosphates, metal salts of alkylbenzenesulfonic acid, metal salts of aromatic carboxylic acids or sulfonic acids, zwitterionic and non-ionic compounds selected from polyoxyethylated alkylamines, lecithin, polyvinylpyrrolidone and organic acid esters of polyvalent alcohols.

4. An electrostatic ink composition according to claim 1, wherein the charge director comprises a sulfosuccinate moiety of the general formula [R₁-O-C(O)CH₂CH(S0₃⁻)OC(O)-O-R₂], where each of R₁ and R₂ is an alkyl group.

5. An electrostatic ink composition according to claim 1, wherein the particles of the electrostatic ink composition comprise two different polymers having acidic side groups: a first polymer having acidic side groups that has a melt flow rate of about 10 g/10 minutes to about 50 g/10 minutes and an acidity of from 50 mg KOH/g to 110 mg KOH/g, and a second polymer having acidic side groups that has a melt flow rate of about 50 g/10 minutes to about 120 g/10 minutes and an acidity of 110 mg KOH/g to 130 mg KOH/g.

6. An electrostatic ink composition according to claim 1, wherein examples of a positively charged organic molecule or an organic molecule capable of becoming a positively charged organic molecule during an electrostatic printing process are:
a species containing a carbocation or capable of forming a carbocation during an electrostatic printing process, a positively charged azine species, a diazonium species, a positively charged amine species and a positively charged phosphine species.

7. An electrostatic ink composition according to claim 1, wherein the first colorant comprises carbon black and the second colorant comprises a cyan pigment.

8. An electrostatic ink composition according to claim 1, wherein the first colorant comprises carbon black and the second colorant comprises a colorant selected from the group consisting of (i) Pigment Blue 15:3 and Violet 23, and (ii) Pigment Blue 60.

9. An electrostatic ink composition according to claim 8, wherein the Pigment Blue 15:3 and Violet 23 are present in a weight/weight ratio of 5:1 to 1:5.

10. An electrostatic ink composition according to claim 1, wherein the polymer has a melt flow rate of 60 g/10 minutes or less, the particles comprise a first colorant and second colorant, the first colorant comprises carbon black and the second colorant comprises Pigment Blue 15:3 and Violet 23, wherein the Pigment Blue 15:3 and Violet 23 are present in a weight/weight ratio of 5:1 to 1:5.

11. A method of producing a electrostatic ink composition according to claim 1, the method comprising:
combining a carrier liquid, a polymer, and a charge director such that the electrostatic ink composition of the claim 1 is formed.

12. A method of electrophotographic printing an electrostatic ink composition of claim 1, the method comprising:
forming a latent electrostatic image on a surface;
contacting the surface with the an electrostatic ink composition of claim 1, such that at least some of the particles adhere to the surface to form a developed toner image on the surface, and transferring the toner image to a print substrate.

13. A method according to claim 12, wherein the method involves passing the electrostatic composition of claim 1 between a stationary electrode and a rotating member, which is a member having the surface having a latent electrostatic image thereon or a member in contact with the surface having a latent electrostatic image thereon.

## Patentansprüche

1. Elektrostatische Tintenzusammensetzung, Folgendes umfassend:
(a) eine Trägerflüssigkeit;
(b) Partikel, die Folgendes umfassen:
(i) ein Polymer mit einer Schmelzflussrate von weniger als 60 g/10 Minuten, gemessen nach ASTM D1238-04c,
(ii) einen ersten Farbstoff und einen zweiten Farbstoff, wobei der erste Farbstoff einen schwarzen Farbstoff umfasst und der zweite Farbstoff einen nichtschwarzen Farbstoff umfasst und wobei der zweite Farbstoff ausgewählt ist aus der Gruppe bestehend aus einem Phthalocyaninfarbstoff, einem Indigoldfarbstoff, einem Indanthronfarbstoff, einem Monoazofarbstoff, einem Diazofarbstoff, anorganischen Salzen und Komplexen, Dioxazinfarbstoff, Perylenfarbstoff, Anthrachinonfarbstoffen und jeglicher Kombination daraus,
(c) einen Ladungsleiter,
wobei die elektrostatische Tintenzusammensetzung ein positiv geladenes organisches Molekül oder ein organisches Molekül, das in der Lage ist, im Verlauf eines elektrostatischen Druckvorgangs zu einem positiv geladenen organischen Molekül zu werden, ausschließt.

2. Elektrostatische Tintenzusammensetzung nach Anspruch 1, wobei das Polymer eine Schmelzflussrate von weniger als 30 g/10 Minuten aufweist.

3. Elektrostatische Tintenzusammensetzung nach Anspruch 1, wobei der Ladungsleiter ausgewählt ist aus der Gruppe bestehend aus Metallsalzen von Fettsäuren, Metallsalzen von Sulfosuccinaten, Metallsalzen von Oxyphosphaten, Metallsalzen von Alkylbenzolsulfonsäure, Metallsalzen von aromatischen Carbonsäuren oder Sulfonsäuren, zwitterionischen und nichtionischen Verbindungen, ausgewählt aus polyoxyethylierten Alkylaminen, Lecithin, Polyvinylpyrrolidon und organischen Säureestern von mehrwertigen Alkoholen.

4. Elektrostatische Tintenzusammensetzung nach Anspruch 1, wobei der Ladungsleiter einen Sulfosuccinat-Molekülteil mit der allgemeinen Formel [R₁-O-C(O)CH₂CH(SO₃⁻)OC(O)-O-R₂] umfasst, wobei sowohl R₁ als auch R₂ eine Alkylgruppe ist.

5. Elektrostatische Tintenzusammensetzung nach Anspruch 1, wobei die Partikel der elektrostatischen Tintenzusammensetzung zwei verschiedene Polymere mit sauren Seitengruppen umfassen: ein erstes Polymer mit sauren Seitengruppen, das eine Schmelzflussrate von etwa 10 g/10 Minuten bis etwa 50 g/10 Minuten und einen Säuregehalt von 50 mg KOH/g bis 110 mg KOH/g aufweist, und ein zweites Polymer mit sauren Seitengruppen, das eine Schmelzflussrate von etwa 50 g/10 Minuten bis etwa 120 g/10 Minuten und einen Säuregehalt von 110 mg KOH/g bis 130 mg KOH/g aufweist.

6. Elektrostatische Tintenzusammensetzung nach Anspruch 1, wobei Beispiele für ein positiv geladenes organisches Molekül oder ein organisches Molekül, das in der Lage ist, im Verlauf eines elektrostatischen Druckvorgangs zu einem positiv geladenen organischen Molekül zu werden, Folgende sind: eine Spezies, die ein Carbokation enthält oder in der Lage ist, im Verlauf eines elektrostatischen Druckvorgangs ein Carbokation auszubilden, eine positiv geladene Azinspezies, eine Diazoniumspezies, eine positiv geladene Aminspezies und eine positive geladene Phosphinspezies.

7. Elektrostatische Tintenzusammensetzung nach Anspruch 1, wobei der erste Farbstoff Ruß umfasst und der zweite Farbstoff ein Cyanpigment umfasst.

8. Elektrostatische Tintenzusammensetzung nach Anspruch 1, wobei der erste Farbstoff Ruß umfasst und der zweite Farbstoff einen Farbstoff umfasst, der ausgewählt ist aus der Gruppe bestehend aus (i) Pigment Blue 15:3 und Violet 23 sowie (ii) Pigment Blue 60.

9. Elektrostatische Tintenzusammensetzung nach Anspruch 8, wobei das Pigment Blue 15:3 und das Violet 23 in einem Gewichtsverhältnis von 5:1 bis 1:5 vorliegen.

10. Elektrostatische Tintenzusammensetzung nach Anspruch 1, wobei das Polymer eine Schmelzflussrate von höchstens 60 g/10 Minuten aufweist, die Partikel einen ersten Farbstoff und einen zweiten Farbstoff umfassen, der erste Farbstoff Ruß umfasst und der zweite Farbstoff Pigment Blue 15:3 und Violet 23 umfasst, wobei das Pigment Blue 15:3 und das Violet 23 in einem Gewichtsverhältnis von 5:1 bis 1:5 vorliegen.

11. Verfahren zum Erzeugen einer elektrostatischen Tintenzusammensetzung nach Anspruch 1, wobei das Verfahren Folgendes umfasst:
Kombinieren einer Trägerflüssigkeit, eines Polymers und eines Ladungsleiters derart, dass die elektrostatische Tintenzusammensetzung nach Anspruch 1 ausgebildet wird.

12. Verfahren zum elektrofotografischen Drucken einer elektrostatischen Tintenzusammensetzung nach Anspruch 1, wobei das Verfahren Folgendes umfasst:
Ausbilden eines latenten elektrostatischen Bildes auf einer Oberfläche;
Inberührungbringen der Oberfläche mit der einen elektrostatischen Tintenzusammensetzung nach Anspruch 1 derart, dass wenigstens manche der Partikel an der Oberfläche anhaften, um ein entwickeltes Tonerbild auf der Oberfläche auszubilden, und Übertragen des Tonerbilds auf ein Drucksubstrat.

13. Verfahren nach Anspruch 12, wobei das Verfahren das Übergeben der elektrostatischen Zusammensetzung nach Anspruch 1 zwischen einer feststehenden Elektrode und einem drehenden Element enthält, wobei es sich um ein Element, das die Oberfläche aufweist, auf der sich ein latentes elektrostatisches Bild befindet, oder ein Element in Berührung mit der Oberfläche handelt, auf der sich ein latentes elektrostatisches Bild befindet.

## Revendications

1. Composition d'encre électrostatique comprenant :
(a) un support liquide ;
(b) des particules comprenant :
(i) un polymère ayant un indice de fluidité à l'état fondu inférieur à 60 g/10 minutes, mesuré selon ASTM D1238-04c
(ii) un premier colorant et un second colorant dans laquelle le premier colorant comprend un colorant noir et le second colorant comprend un colorant non noir et dans laquelle le second colorant est choisi dans le groupe constitué d'un colorant de phthalocyanine, un colorant indigold, un colorant d'indanthrone, un colorant monoazoïque, un colorant diazoïque, des sels inorganiques et des complexes, un colorant de dioxazine, un colorant à base de pérylène, des colorants d'anthraquinone, et toute combinaison de ceux-ci,
(c) un directeur de charge,
dans laquelle la composition d'encre électrostatique exclut une molécule organique positivement chargée ou une molécule organique capable de devenir une molécule organique positivement chargée pendant un procédé d'impression électrostatique.

2. Composition d'encre électrostatique selon la revendication 1, dans laquelle le polymère a un indice de fluidité à l'état fondu inférieur à 30 g/10 minutes.

3. Composition d'encre électrostatique selon la revendication 1, dans laquelle le directeur de charge est choisi dans le groupe constitué de sels métalliques d'acides gras, de sels métalliques de sulfosuccinates, de sels métalliques d'oxyphosphates, de sels métalliques d'acide benzènesulfonique d'alkyle, de sels métalliques d'acides carboxyliques aromatiques ou d'acides sulfoniques, de composés zwittérioniques et non ioniques choisis parmi des alkylamines polyoxyéthylées, la lécithine, le polyvinylpyrrolidone et des esters d'acides organiques d'alcools polyvalents.

4. Composition d'encre électrostatique selon la revendication 1, dans laquelle le directeur de charge comprend une fraction de sulfosuccinate de la formule générale [R₁-O-C(O)CH₂CH(S0₃⁻)OC(O)-O-R₂], où chacun de R₁ et R₂ est un groupe alkyle.

5. Composition d'encre électrostatique selon la revendication 1, dans laquelle les particules de la composition d'encre électrostatique comprennent deux polymères différents ayant des groupes latéraux acides : un premier polymère ayant des groupes latéraux acides qui a un indice de fluidité à l'état fondu d'environ 10 g/10 minutes à environ 50 g/10 minutes et une acidité de 50 mg KOH/g à 110 mg KOH/g, et un second polymère ayant des groupes latéraux acides qui a un indice de fluidité à l'état fondu d'environ 50 g/10 minutes à environ 120 g/10 minutes et une acidité de 110 mg KOH/g à 130 mg KOH/g.

6. Composition d'encre électrostatique selon la revendication 1, dans laquelle des exemples d'une molécule organique positivement chargée ou d'une molécule organique capable de devenir une molécule organique positivement chargée pendant un procédé d'impression électrostatique sont : une espèce contenant un carbocation ou capable de former un carbocation pendant un procédé d'impression électrostatique, une espèce d'azine positivement chargée, une espèce de diazonium, une espèce d'amine positivement chargée et une espèce de phosphine positivement chargée.

7. Composition d'encre électrostatique selon la revendication 1, dans laquelle le premier colorant comprend du noir de carbone et le second colorant comprend un pigment cyan.

8. Composition d'encre électrostatique selon la revendication 1, dans laquelle le premier colorant comprend du noir de carbone et le second colorant comprend un colorant choisi dans le groupe constitué du (i) Pigment Bleu 15:3 et Violet 23, et du (ii) Pigment Bleu 60.

9. Composition d'encre électrostatique selon la revendication 8, dans laquelle le Pigment Bleu 15:3 et Violet 23 sont présents dans un rapport poids/poids de 5:1 à 1:5.

10. Composition d'encre électrostatique selon la revendication 1, dans laquelle le polymère a un indice de fluidité à l'état fondu de 60 g/10 minutes ou moins, les particules comprennent un premier colorant et un second colorant, le premier colorant comprend du noir de carbone et le second colorant comprend le Pigment Bleu 15:3 et Violet 23, dans laquelle le Pigment Bleu 15:3 et Violet 23 sont présents dans un rapport poids/poids de 5:1 à 1:5.

11. Procédé de production d'une composition d'encre électrostatique selon la revendication 1, le procédé comprenant :
la combinaison d'un support liquide, d'un polymère, et d'un directeur de charge de sorte que la composition d'encre électrostatique selon la revendication 1 est formée.

12. Procédé d'impression électrophotographique d'une composition d'encre électrostatique selon la revendication 1, le procédé comprenant :
la formation d'une image électrostatique latente sur une surface ;
le contact de la surface avec la composition d'encre électrostatique selon la revendication 1, de sorte qu'au moins certaines des particules adhèrent à la surface pour former une image de toner développée sur la surface, et le transfert de l'image de toner sur un substrat d'impression.

13. Procédé selon la revendication 12, dans lequel le procédé implique le passage de la composition électrostatique selon la revendication 1 entre une électrode fixe et un élément rotatif, qui est un élément ayant la surface ayant une image électrostatique latente sur celle-ci ou un élément en contact avec la surface ayant une image électrostatique latente sur celle-ci.
